# EUROPÄISCHE PATENTSCHRIFT

(11) **EP 3 132 300 B1**
(45) Veröffentlichungstag und Bekanntmachung des Hinweises auf die Patenterteilung: **02.09.2020**
(21) Anmeldenummer: 15716801.4
(22) Anmeldetag: 16.04.2015
(51) Int. Cl.: G02B 27/01, G02C 7/08, G02C 7/02, G02B 6/34

(54) **BRILLENGLAS FÜR EINE AUF DEN KOPF EINES BENUTZERS AUFSETZBARE UND EIN BILD ERZEUGENDE ANZEIGEVORRICHTUNG**
EYEGLASS LENS FOR A DISPLAY DEVICE, WHICH DISPLAY DEVICE CAN BE PLACED ON THE HEAD OF A USER AND PRODUCES AN IMAGE
VERRE DE LUNETTES POUR DISPOSITIF D'AFFICHAGE POSITIONNABLE SUR LA TÊTE D'UN UTILISATEUR ET GÉNÉRANT UNE IMAGE

(30) Priorität: 17.04.2014 DE 102014207495
(43) Veröffentlichungstag der Anmeldung: 22.02.2017
(73) Patentinhaber: tooz technologies GmbH, 73430 Aalen (DE)
(72) Erfinder: RUDOLPH, Günter, 07743 Jena (DE); DOBSCHAL, Hans-Jürgen, 99510 Kleinromstedt (DE)
(74) Vertreter: Patentanwälte Geyer, Fehners & Partner mbB
(86) Internationale Anmeldenummer: PCT/EP2015/058276
(87) Internationale Veröffentlichungsnummer: WO 2015/158831

(56) Entgegenhaltungen:
- EP-A1- 2 418 073
- WO-A1-2008/090000
- WO-A2-2011/095379
- US-A1- 2002 030 639
- US-A1- 2002 036 751

## Beschreibung

Die vorliegende Erfindung betrifft ein Brillenglas für eine auf den Kopf eines Benutzers aufsetzbare und ein Bild erzeugende Anzeigevorrichtung, wobei das Brillenglas eine Vorderseite und eine Rückseite, einen Einkoppelabschnitt und einen vom Einkoppelabschnitt beabstandeten Auskoppelabschnitt sowie einen Lichtführungskanal aufweist, der dazu geeignet ist, Lichtbündel von Pixeln des erzeugten Bildes, die über den Einkoppelabschnitt des Brillenglases in das Brillenglas eingekoppelt sind, im Brillenglas bis zum Auskoppelabschnitt zu führen, von dem sie aus dem Brillenglas ausgekoppelt werden.

Wünschenswert ist es, ein solches Brillenglas mit möglichst geringer Dicke herstellen zu können, wobei gleichzeitig eine gute Abbildung des Bildes bei Verwendung des Brillenglases in einer Anzeigevorrichtung sichergestellt werden soll.

Aus der US 2002/0036751 A1 ist ein Brillenglas mit den Merkmalen des Oberbegriffs des Anspruches 1 bekannt.

Ausgehend hiervon ist es daher Aufgabe der Erfindung, ein Brillenglas der eingangs genannten Art so weiterzubilden, dass es mit geringer Dicke und guten Abbildungseigenschaften hergestellt werden kann.

Die Aufgabe wird bei einem Brillenglas der eingangs genannten Art dadurch gelöst, dass das Brillenglas mehrschalig aufgebaut ist und eine Außenschale sowie eine mit der Außenschale verbundene Innenschale aufweist, wobei die von der Innenschale wegweisende erste Seite der Außenschale die Vorderseite des Brillenglases bildet und die von der Außenschale wegweisende erste Seite der Innenschale die Rückseite des Brillenglases bildet, wobei die Außenschale den Einkoppelabschnitt, den Lichtführungskanal und den Auskoppelabschnitt aufweist, die Innenschale eine Aussparung aufweist, die sich von der zur Außenschale hinweisenden zweiten Seite der Innenschale in Richtung zur Rückseite erstreckt und in der der Lichtführungskanal sitzt, wobei der Auskoppelabschnitt neben der Aussparung liegt, so dass die vom Auskoppelabschnitt ausgekoppelten Lichtbündel über die zweite Seite der Innenschale in die Innenschale eintreten, durch die Innenschale laufen und die Innenschale über die Rückseite verlassen.

Durch diesen zweischaligen Aufbau in Kombination mit der Aussparung kann die Dicke des Brillenglases möglichst gering gehalten werden. Gleichzeitig kann der Lichtführungskanal, der Teil der Außenschale ist, so ausgebildet werden, dass die gewünschten guten Abbildungseigenschaften sichergestellt werden können.

Insbesondere kann sich die Aussparung von der zweiten Seite der Innenschale bis zur ersten Seite der Innenschale erstrecken. Die Aussparung erstreckt sich somit über die gesamte Dicke der Innenschale und kann auch als Durchgangsöffnung bezeichnet werden.

Die Aussparung kann dabei, in Draufsicht auf die Innenschale gesehen, an allen Seiten von Bereichen der Innenschale begrenzt sein oder zumindest an einer Seite offen sein. Insbesondere kann die Aussparung, in Draufsicht auf die Innenschale gesehen, U-förmig ausgebildet sein.

Es ist ferner möglich, dass sich die Aussparung nicht über die gesamte Dicke der Innenschale erstreckt. In diesem Falle liegt somit eine entsprechende Vertiefung vor, die sich von der zweiten Seite in die Innenschale erstreckt. Die Tiefe der Vertiefung ist insbesondere so gewählt, dass der in der Vertiefung liegende Lichtführungskanal nicht in Kontakt mit der Bodenfläche der Vertiefung steht, so dass noch ein Luftspalt vorliegt. Es ist jedoch auch möglich, dass kein Luftspalt vorhanden ist und der Lichtführungskanal in Kontakt mit der Bodenfläche der Vertiefung steht.

Bei dem erfindungsgemäßen Brillenglas können die Vorderseite und/oder die Rückseite gekrümmt ausgebildet sein. Insbesondere kann die Rückseite eine Krümmung aufweisen, die so gewählt ist, dass eine Fehlsichtigkeitskorrektur bewirkt wird. Dies führt zu dem Vorteil, dass auch für die ausgekoppelten Lichtbündel die gewünschte Fehlsichtigkeitskorrektur vorliegt, da diese so ausgekoppelt werden, dass sie über die Rückseite der Innenschale aus dem Brillenglas austreten.

Mit dem erfindungsgemäßen Brillenglas kann somit mittels der Außenschale die Führung und Auskopplung der Lichtbündel bezüglich einer gewünschten Abbildung optimiert werden. Unabhängig davon kann mittels der Innenschale die gewünschte Fehlsichtigkeitskorrektur optimiert werden. Somit können mit dem erfindungsgemäßen Brillenglas die Abbildungseigenschaften einerseits über die Außenschale und die Fehlsichtigkeitskorrektureigenschaften andererseits über die Innenschale voneinander unabhängig ausgelegt und eingestellt werden.

Insbesondere sind die Innen- und Außenschale aus den gleichen Materialien gebildet.

Des weiteren kann die Innenschale mit der Außenschale flächig verbunden sein (z.B. verklebt oder verkittet mit einem optischen Kitt oder optischen Kleber).

Bevorzugt sind die einander zu weisenden Seiten von Innen- und Außenschale zueinander komplementär ausgebildet.

Insbesondere können diese einander zu weisenden Seiten sphärisch gekrümmt sein.

Des weiteren kann die Außenseite und/oder die Innenseite sphärisch gekrümmt sein.

Der Auskoppelabschnitt kann mehrere nebeneinander angeordnete reflektive Umlenkflächen aufweisen. Die reflektiven Umlenkflächen können auch als reflektive Facetten bezeichnet werden. Sie können eine Reflektivität von nahezu 100 % aufweisen und in diesem Fall als Spiegelflächen bezeichnet werden. Es ist auch möglich, dass sie eine geringere Reflektivität aufweisen und somit teiltransparent ausgebildet sind.

Die reflektiven Umlenkflächen können jeweils plan oder gekrümmt ausgebildet sein. Ferner können die Umlenkflächen fresnelartig eine gekrümmte Reflexionsfläche nachstellen, die neben einer reiner Strahlumlenkung auch eine abbildende Eigenschaft aufweist.

Der Auskoppelabschnitt kann in der Außenschale vergraben sein. Insbesondere kann der Auskoppelabschnitt so ausgebildet sein, dass die Vorderseite des Brillenglases eine glatte, durchgehende Fläche ist.

Der Lichtführungskanal kann zwei gegenüberliegende Grenzflächen aufweisen, an denen die Lichtbündel zur Führung reflektiert werden.

Insbesondere kann eine der Grenzflächen des Lichtführungskanals durch einen Abschnitt der ersten Seite der Außenschale gebildet sein.

Des weiteren kann die von der ersten Seite der Außenschale wegweisende Grenzfläche des Lichtführungskanals so ausgebildet sein, dass sie eine abbildende Eigenschaft aufweist.

Die Reflexion an den Grenzflächen kann durch innere Totalreflexion stattfinden. Es ist jedoch auch möglich, dass zumindest eine der Grenzflächen (oder beide) eine reflektierende oder teilreflektierende Beschichtung aufweisen. Die Beschichtung kann insbesondere eine metallische Beschichtung sein. Ferner kann die Beschichtung so ausgebildet sein, dass sie Lichtbündel mit einem ersten Polarisationszustand reflektiert und Lichtbündel mit einem zum ersten Polarisationszustand orthogonalen Polarisationszustand transmittiert. Die reflektierende Beschichtung kann ferner als Interferenzschichtsystem ausgebildet sein.

Ferner kann der Lichtführungskanal gegenüber einer zur Innenschale hinweisenden zweiten Seite der Außenschale vorstehen.

Der Einkoppelabschnitt kann in einem Randbereich des Brillenglases und der Auskoppelabschnitt kann in einem Mittelbereich des Brillenglases ausgebildet sein.

Die Innenschale und die Außenschale können jeweils einstückig ausgebildet sein. Es ist jedoch auch möglich, dass die Innenschale und/oder die Außenschale mehrstückig ausgebildet ist.

Insbesondere kann die Außenschale mehrschalig ausgebildet sein. Sie kann z.B. zumindest zwei Teilschalen aufweisen. Gleiches gilt für die Innenschale.

Wenn die Außenschale mehrschalig ausgebildet ist, kann der Auskoppelabschnitt zwischen zwei Teilschalen der Außenschale liegen. Zumindest eine der Teilschalen kann als Folie ausgebildet sein. Beispielsweise als PC-Folie. Die Folie kann dabei eine Eigenstabilität aufweisen, so dass sie ihre Form ohne Einwirkung weiterer Kräfte mit Ausnahme der Schwerkraft beibehält. Die Folie muss jedoch keine Eigenstabilität aufweisen. Insbesondere kann die Folie flexibel ausgebildet sein.

Die äußere Teilschale, die die Vorderseite des Brillenglases bildet, kann auch als Deckschale ausgebildet sein.

Die Materialien der Teilschalen der Außenschale können gleich oder verschieden sein. Gleiches gilt für die Materialien der Teilschalen der Innenschale. Auch können alle Teilschalen der Außen- und der Innenschale aus dem gleichen Material oder aus unterschiedlichen Materialien gebildet sein.

Die von der Innenschale wegweisende erste Seite der Außenschale, die die Vorderseite des Brillenglases bildet, kann eine Beschichtung und/oder eine Vergütung aufweisen. Beispielsweise kann eine Antireflexionsbeschichtung und/oder eine Hartbeschichtung auf der ersten Seite ausgebildet sein. Auch weitere Beschichtungen, die im Bereich von Brillengläsern üblich sind, können vorgesehen sein.

Das erfindungsgemäße Brillenglas kann so ausgebildet sein, dass der Lichtführungskanal ausschließlich in der Außenschale liegt. Es ist jedoch auch möglich, dass der Lichtführungskanal zumindest teilweise durch einen Bereich in der Innenschale verläuft. Insbesondere kann in einem Bereich der Innenschale, der an die Aussparung der Innenschale angrenzt, ein Teil des Lichtführungskanals liegen.

Ferner ist es möglich, dass neben der Aussparung ein Bereich mit einer teilreflektiven Beschichtung oder einer reflektiven Beschichtung ausgebildet ist, so dass der an der teilreflektiven oder reflektiven Beschichtung reflektierte Anteil der Lichtbündel in der Innenschale geführt wird und dann auf den Auskoppelabschnitt trifft. Auch in diesem Fall liegt ein Teil des Lichtführungskanals in der Innenschale. Die teilreflektive Beschichtung oder reflektive Beschichtung kann insbesondere zwischen Außen- und Innenschale vorgesehen sein. So kann die teilreflektive oder reflektive Beschichtung auf der zweiten Seite der Innenschale und/oder der zur Innenschale hin weisenden zweiten Seite der Außenschale ausgebildet sein.

Es wird ferner eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik, die ein Brillenglas nach einem der obigen Ansprüche aufweist und die das erzeugte Bild im auf dem Kopf des Benutzers aufgesetzten Zustand der Haltevorrichtung so abbildet, dass es der Benutzer als virtuelles Bild wahrnehmen kann, bereitgestellt.

Die Abbildungsoptik kann das Brillenglas als einziges optisches Element aufweisen. Es ist jedoch auch möglich, dass die Abbildungsoptik neben dem Brillenglas noch zumindest ein weiteres optisches Element umfaßt. Insbesondere kann die Außenschale zusammen mit dem zumindest einem weiteren optischen Element einstückig ausgebildet sein. Alternativ ist es möglich, dass die Außenschale mit dem zumindest einen weiteren optischen Element (z.B. durch Verkitten oder Verkleben) verbunden ist. Ferner kann das zumindest eine weitere optische Element von der Außenschale beabstandet sein.

Die Außenschale zusammen mit dem zumindest einem optischen Element kann in einer Ansicht von oben eine L-Form aufweisen. Das zumindest eine weitere optische Element kann sich somit in Richtung eines herkömmlichen Brillenbügels erstrecken. Insbesondere kann es Teil des Brillenbügels sein.

Das zumindest eine optische Element kann eine oder mehrere abbildende optische Flächen (in Transmission und/oder Reflexion) aufweisen, die zur Erzeugung einer möglichst fehlerfreien Abbildung des erzeugten Bildes für den Benutzer der Anzeigevorrichtung optimiert sein können. Das zumindest eine weitere optische Element kann z.B. eine Kollimationsoptik sein, die zwischen dem Brillenglas und dem Bilderzeugungsmodul angeordnet ist, so dass die Lichtbündel vom Bilderzeugungsmodul als kollimierte Bündel in das Brillenglas eingekoppelt werden können.

Ferner kann die Anzeigevorrichtung eine Steuereinheit aufweisen, die das Bilderzeugungsmodul ansteuert.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Der Bildgeber kann eine Mehrzahl von Pixeln aufweisen, die z.B. in Zeilen und Spalten angeordnet sein können. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Die erfindungsgemäße Anzeigevorrichtung kann weitere, dem Fachmann bekannte Elemente aufweisen, die zu ihrem Betrieb notwendig sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführungsform der erfindungsgemäßen Anzeigevorrichtung;
- Fig. 2: eine vergrößerte Teilschnittansicht des ersten Brillenglases 3 einschließlich einer schematischen Darstellung des Bilderzeugungsmoduls;
- Fig. 3: eine perspektivische Darstellung des ersten Brillenglases 3 der Ausführungsform gemäß Fig. 1 und 2;
- Fig. 4: eine perspektivische Explosionsdarstellung des ersten Brillenglases 3 gemäß Fig. 3;
- Fig. 5: eine Ansicht des ersten Brillenglases 3 gemäß Fig. 3 von oben;
- Fig. 6: eine Schnittansicht des ersten Brillenglases 3 von Fig. 3;
- Fig. 7: eine perspektivische Ansicht einer weiteren Ausführungsform des erfindungsgemäßen Brillenglases 3;
- Fig. 8: eine perspektivische Explosionsdarstellung des erfindungsgemäßen Brillenglases 3 gemäß Fig. 7;
- Fig. 9: eine Ansicht des erfindungsgemäßen Brillenglases 3 von Fig. 7 von oben;
- Fig. 10: eine Schnittansicht des erfindungsgemäßen Brillenglases 3 gemäß Fig. 7;
- Fig. 11: eine perspektivische Darstellung einer weiteren Ausführungsform des erfindungsgemäßen Brillenglases 3;
- Fig. 12: eine Schnittansicht des erfindungsgemäßen Brillenglases 3 gemäß Fig. 11;
- Fig. 13: eine perspektivische Explosionsdarstellung einer Abwandlung des erfindungsgemäßen Brillenglases gemäß Fig. 3;
- Fig. 14: eine vergrößerte Teilschnittansicht gemäß Fig. 2;
- Fig. 15: eine vergrößerte Teilschnittansicht gemäß Fig. 14 einer weiteren Ausführungsform des ersten Brillenglases 3;
- Fig. 16: eine vergrößerte Detaildarstellung des Auskoppelbereichs 13 von Fig. 15;
- Fig. 17: eine vergrößerte Teilschnittansicht gemäß Fig. 2 einer weiteren Ausführungsform des ersten Brillenglases 3, und
- Fig. 18: eine vergrößerte Teilschnittansicht gemäß Fig. 17 einer Abwandlung des erfindungsgemäßen ersten Brillenglases 3.

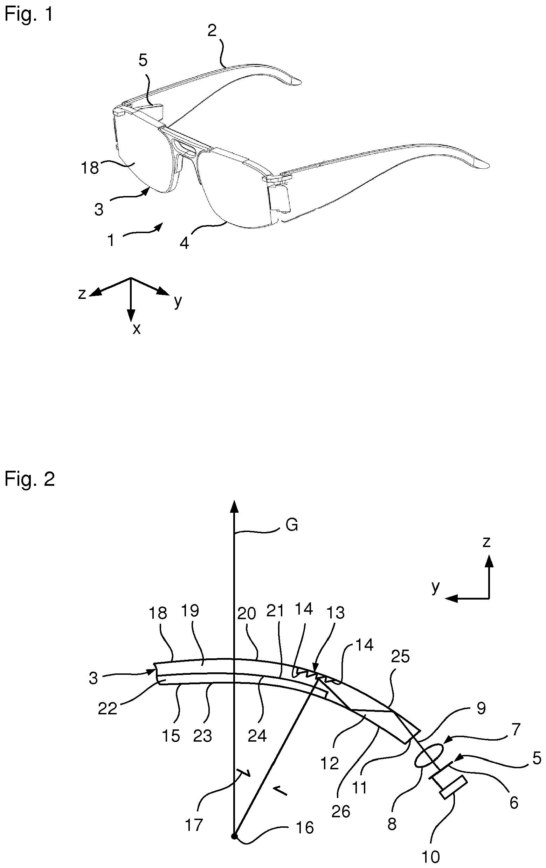

Bei der in Fig. 1 gezeigten Ausführungsform umfaßt die erfindungsgemäße Anzeigevorrichtung 1 eine auf den Kopf eines Benutzers aufsetzbare Haltevorrichtung 2, die z.B. in Art eines herkömmlichen Brillengestells ausgebildet sein kann, sowie ein erstes und ein zweites Brillenglas 3, 4, die an der Haltevorrichtung 2 befestigt sind. Die Haltevorrichtung 2 mit den Brillengläsern 3, 4 kann z.B. als Sportbrille, Sonnenbrille und/oder Brille zur Korrektur einer Fehlsichtigkeit ausgebildet sein, wobei dem Benutzer über das erste Brillenglas 3 ein virtuelles Bild in sein Gesichtsfeld eingespiegelt werden kann, wie nachfolgend beschrieben wird.

Dazu umfaßt die Anzeigevorrichtung 1 ein Bilderzeugungsmodul 5, das im Bereich des rechten Brillenbügels der Haltevorrichtung 2 angeordnet sein kann, wie in Fig. 1 schematisch dargestellt ist. Das Bilderzeugungsmodul 5 kann ein flächiges Bilderzeugungselement 6 (Fig. 2), wie z.B. einen OLED-, einen LCD- oder einen LCoS-Chip oder eine Kippspiegelmatrix, mit einer Vielzahl von z.B. in Spalten und Zeilen angeordneten Pixeln aufweisen.

Die Brillengläser 3 und 4 und insbesondere das erste Brillenglas 3 sind nur beispielshalber zusammen mit der erfindungsgemäßen Anzeigevorrichtung 1 beschrieben. Die Brillengläser 3, 4 bzw. zumindest das erste Brillenglas 3 sind jeweils für sich als erfindungsgemäßes Brillenglas 3, 4 oder als erfindungsgemäßes optisches Element ausgebildet. Das erfindungsgemäße optische Element kann auch in anderem Zusammenhang als mit der hier beschriebenen Anzeigevorrichtung 1 eingesetzt werden. Daher kann das optische Element, wenn es als Brillenglas ausgebildet ist, natürlich auch als zweites Brillenglas 4 ausgebildet sein.

Wie am besten aus der vergrößerten, schematischen Teilschnittansicht in Fig. 2 ersichtlich ist, weist die Anzeigevorrichtung 1 eine Abbildungsoptik 7 auf, die ein zwischen dem Bilderzeugungselement 6 bzw. dem Bildgeber 6 und dem ersten Brillenglas 3 angeordnetes Optikelement 8 enthält. Des weiteren dient das erste Brillenglas 3 selbst auch als Teil der Abbildungsoptik 7.

Von jedem Pixel des Bildgebers 6 kann ein Lichtbündel 9 ausgehen. Durch eine entsprechende Ansteuerung der Pixel des Bildgebers 6 mittels einer Steuereinheit 10, die Teil des Bilderzeugungsmoduls 5 sein kann, kann das gewünschte Bild erzeugt werden. In Fig. 2 ist stellvertretend für die Lichtbündel 9 der Strahlengang eines Lichtstrahls eingezeichnet, so dass nachfolgend auch von dem Lichtstrahl 9 die Rede ist.

Der vom Bildgeber 6 ausgehende Lichtstrahl 9 läuft durch das Optikelement 8 und tritt über einen Einkoppelabschnitt 11 (hier die Stirnseite des ersten Brillenglases 3) in das erste Brillenglas 3 ein und wird in diesem entlang eines Lichtführungskanals 12 bis zu einem Auskoppelabschnitt 13 geführt. Der Auskoppelabschnitt 13 weist mehrere nebeneinander angeordnete reflektive Umlenkflächen 14 (die auch als reflektive Facetten bezeichnet werden können) auf, an denen eine Reflexion der Lichtstrahlen 9 in Richtung zu einer Rückseite 15 des ersten Brillenglases 3 stattfindet, so dass die Lichtstrahlen 9 über die Rückseite 15 aus dem ersten Brillenglas 3 austreten.

Somit kann ein Benutzer, wenn er die erfindungsgemäße Anzeigevorrichtung 1 bestimmungsgemäß auf dem Kopf trägt, das mittels des Bildgebers 6 erzeugte Bild als virtuelles Bild wahrnehmen, wenn er auf den Auskoppelabschnitt 13 blickt. Bei der hier beschriebenen Ausführungsform muß der Benutzer bezogen auf die Blickrichtung G eines Geradeausblicks um ca. 40° nach rechts schauen. In Fig. 2 ist zur Verdeutlichung der Drehpunkt 16 des Auges des Benutzers sowie die Eyebox 17 bzw. die Austrittspupille 17 der Abbildungsoptik 7 eingezeichnet. Die Eyebox 17 ist der Bereich, der durch die Anzeigevorrichtung 1 bereitgestellt wird und in dem sich das Auge des Benutzers bewegen kann und er stets noch das erzeugte Bild als virtuelles Bild sehen kann.

Obwohl bei der beschriebenen Ausführungsform die Einkopplung über die Stirnseite des ersten Brillenglases 3 durchgeführt ist und somit der Einkoppelabschnitt 11 auf der Stirnseite des ersten Brillenglases 3 ausgebildet ist, ist es auch möglich, eine Einkopplung über die Rückseite 15 des ersten Brillenglases durchzuführen.

Wie in der schematischen Darstellung in Fig. 2 gezeigt ist, ist sowohl die Rückseite 15 als auch die Vorderseite 18 des ersten Brillenglases 3 gekrümmt ausgebildet.

Das erste Brillenglas 3 ist ferner, wie insbesondere den Darstellungen in Fig. 2 bis 6 zu entnehmen ist, zweischalig ausgebildet und umfaßt eine Außenschale 19 mit einer ersten und zweiten Seite 20 und 21 sowie eine Innenschale 22 mit einer ersten und zweiten Seite 23 und 24.

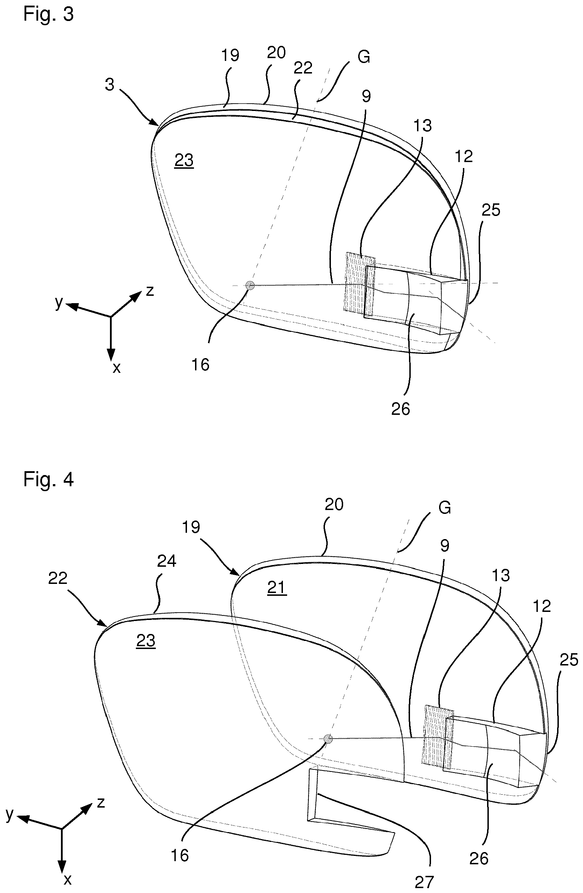

Die erste Seite 20 der Außenschale 19 bildet die Vorderseite 18 des ersten Brillenglases 3 und die erste Seite 23 der Innenschale 22 bildet die Rückseite 15 des ersten Brillenglases 3. Die zweite Seite 21 der Außenschale 18 sowie die zweite Seite 24 der Innenschale 22, die einander zugewandt sind, weisen komplementäre Krümmungen auf, so dass sie flächig miteinander verbunden werden können, wie in Fig. 2 und 3 angedeutet ist.

Die Außenschale 19 weist den Einkoppelabschnitt 11, den Lichtführungskanal 12 sowie den Auskoppelabschnitt 13 auf. Der Lichtführungskanal 12 ist dabei so ausgebildet, dass die gewünschte Führung der Lichtstrahlen 9 vom Einkoppelabschnitt 11 bis zum Auskoppelabschnitt 13 erfolgt. Dies kann z.B. durch innere Totalreflexion an den in z-Richtung gegenüberliegenden Grenzflächen 25 und 26 des Lichtführungskanals 12 erfolgen. Natürlich ist es auch möglich, dass auf der Grenzfläche 25 und/oder auf der Grenzfläche 26 eine reflektive Beschichtung ausgebildet ist, die die gewünschte Reflexion der Lichtstrahlen 9 bewirkt. Die Reflektivität der reflektiven Beschichtung kann z.B. so groß wie möglich (ca. 100 %) oder geringer sein. Die reflektive Beschichtung kann somit als Spiegelschicht oder als teilreflektive Schicht ausgebildet sein.

Bei der hier beschriebenen Ausführungsform ist die Grenzfläche 25 Teil der ersten Seite 20 der Außenschale 19 und somit Teil der Vorderseite 18. Die Grenzfläche 26 ist hingegen nicht Teil der zweiten Seite 21 der Außenschale sondern ist eine separat ausgebildete Grenzfläche, die neben der Lichtführung auch eine optisch abbildende Eigenschaft bereitstellen kann, um z.B. Abbildungsfehler zu verringern. Somit steht der Lichtführungskanal 12 gegenüber der zweiten Seite 21 der Außenschale 19 vor und weist somit in der z-Richtung eine größere Dicke auf als die Außenschale 19.

Um dennoch ein insgesamt dünnes erstes Brillenglas 3 bereitstellen zu können, weist die Innenschale 22 eine Aussparung 27 auf, die sich von der zweiten Seite 24 der Innenschale 22 in Richtung zur ersten Seite 23 der Innenschale 22 erstreckt. Bei dem hier beschriebenen Ausführungsbeispiel erstreckt sich die Aussparung über die gesamte Dicke (Ausdehnung in z-Richtung) der Innenschale 22. Die Aussparung 27 ist so bemessen, dass in ihr im zusammengesetzten Zustand der Lichtführungskanal 12 sitzt und der Auskoppelabschnitt 13 neben der Aussparung 27 und somit vor der zweiten Seite 24 der Innenschale 22 liegt.

Diese Anordnung kann man z.B. für ein erstes Brillenglas mit Fehlsichtigkeitskorrektur in vorteilhafter Weise einsetzen, da die Krümmung der ersten Seite 23 der Innenschale 22 so gewählt werden kann, dass die gewünschte Fehlsichtigkeitskorrektur erreicht wird. Dies führt dann automatisch dazu, dass ein Benutzer der Anzeigevorrichtung 1 mit einem solchen ersten Brillenglas 3 das virtuelle Bild ebenfalls scharf wahrnehmen kann, da er dies über die Korrekturfläche bzw. erste Seite 23 der Innenschale 22 wahrnimmt. In anderen Worten erfolgt die Auskopplung der Lichtbündel 9 durch Reflexion an den reflektiven Facetten 14 des Auskoppelabschnittes 13 derart, dass die Lichtbündel 9 in Richtung zur Innenschale 22 reflektiert werden, über die zweite Seite 24 der Innenschale 22 in die Innenschale 22 eintreten, durch sie hindurchlaufen und über die erste Seite 23 der Innenschale 22 austreten.

Mit dem erfindungsgemäßen Brillenglas 3 ist es somit möglich, die Anforderungen zur Fehlsichtigkeitskorrektur durch die Innenschale 22 und die Anforderungen für die Erzeugung des virtuellen Bildes durch die Außenschale 19 zu verwirklichen. Man kann daher die Innenschale 22 auch als Korrekturglas 22 und die Außenschale 19 als Datenglas 19 bezeichnen. Es liegt somit eine Funktionstrennung zwischen Fehlsichtigkeitskorrektur und Abbildung für das virtuelle Bild vor, so dass die Außenschale 19 für die Abbildung und die Innenschale 22 für die Fehlsichtigkeitskorrektur voneinander unabhängig optimiert werden können. Es ist somit auch möglich, für die Abbildung des virtuellen Bildes eine Außenschale 19 bereitzustellen, die nur mit einer an den jeweiligen Benutzer individuelle angepaßten Innenschale 22 kombiniert werden muß, um eine an den Benutzer individuell angepaßten Anzeigevorrichtung 1 bereitstellen zu können.

Bei der hier beschriebenen Ausführungsform sind die beiden Seiten 20, 21 der Außenschale 19 sphärisch gekrümmt und weist die erste Seite 20 der Außenschale 19 einen Krümmungsradius von 94 mm und weist die zweite Seite 21 der Außenschale 19 einen Krümmungsradius von 92 mm auf. Somit beträgt die Dicke der Außenschale 2 mm. Lediglich der Lichtführungskanal 12 weist eine größere Dicke auf, die z.B. 4 mm oder größer sein kann.

Die zweite Seite 24 der Innenschale 22 ist sphärisch gekrümmt und weist einen Krümmungsradius auf, der dem Radius der zweiten Seite 21 der Außenschale 19 entspricht. Dies ist hier also ein Radius von 92 mm. Die erste Seite 23 der Innenschale 22 ist sphärisch gekrümmt und weist den zur Korrektur der Fehlsichtigkeit des Benutzers erforderlichen Krümmungsradius auf (z.B. 150 mm bei der Verwendung von PMMA als Material für die Innenschale 22). Natürlich kann die erste Seite 23 der Innenschale auch asphärisch gekrümmt sein. Bevorzugt ist das Material der Außenschale 19 das gleiche wie das Material der Innenschale 22. Die Dicke der Innenschale 22 hängt im wesentlichen vom Unterschied zwischen dem Radius der zweiten Seite 24 der Innenschale 22 und der ersten Seite 23 der Innenschale 22 ab und beträgt in dem hier beschriebenen Beispiel ca. 3 mm.

Wie bereits erwähnt, sind die Materialien der Innen- und Außenschale 22 und 19 bevorzugt gleich, so dass sie einen identischen Brechungsindex aufweisen. Die Innen- und Außenschalle 22 und 19 sind bevorzugt ganzflächig verklebt, so dass ein kompaktes erstes Brillenglas 3 erzeugt wird, bei dem lediglich die Aussparung 27 um den Lichtführungskanal 12 herumgreift.

Das erste Brillenglas 3 der hier beschriebenen Ausführungsform stellt eine Korrektur von + 2 Dioptrien bereit.

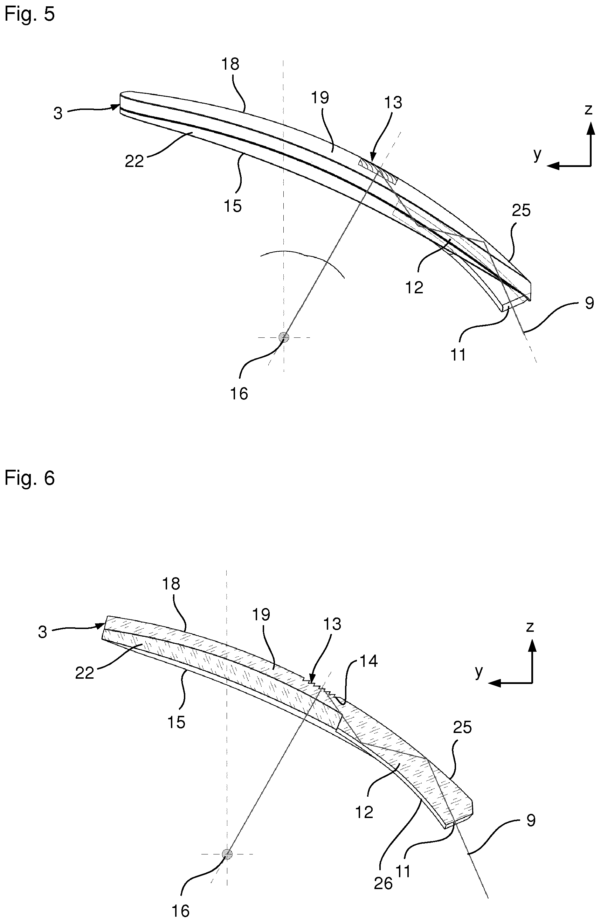

Der zweischalige Aufbau ist in der Ansicht von oben gemäß Fig. 5 und der Schnittansicht von Fig. 6 ebenfalls gut zu erkennen. Wie insbesondere in Fig. 6 dargestellt ist, sind die reflektiven Facetten 14 an der Vorderseite 18 des ersten Brillenglases 3 ausgebildet. Insbesondere sind die reflektiven Facetten 14 mit einem transparenten Material (nicht gezeigt) aufgefüllt, so dass eine durchgehende glatte Vorderseite 18 vorliegt. Bevorzugt wird als Material zur Auffüllung das gleiche Material verwendet, aus dem der restliche Teil der Außenschale 19 gebildet ist.

In einer nicht gezeigten Abwandlung können die reflektiven Umlenkflächen 14 auch von der Vorderseite 18 beabstandet und somit in der Außenschale 19 vergraben ausgebildet sein.

Bei der beschriebenen Ausbildung des Lichtführungskanals 12 ist aufgrund der hinsichtlich der Abbildung des virtuellen Bildes optimierten Grenzfläche 26 eine Verfälschung der Sicht auf die Umgebung gegeben. Da der Lichtführungskanal 12 aber weit an der Peripherie des normalen Gesichtsfeldes liegt, ist diese Verfälschung für den Benutzer nicht störend.

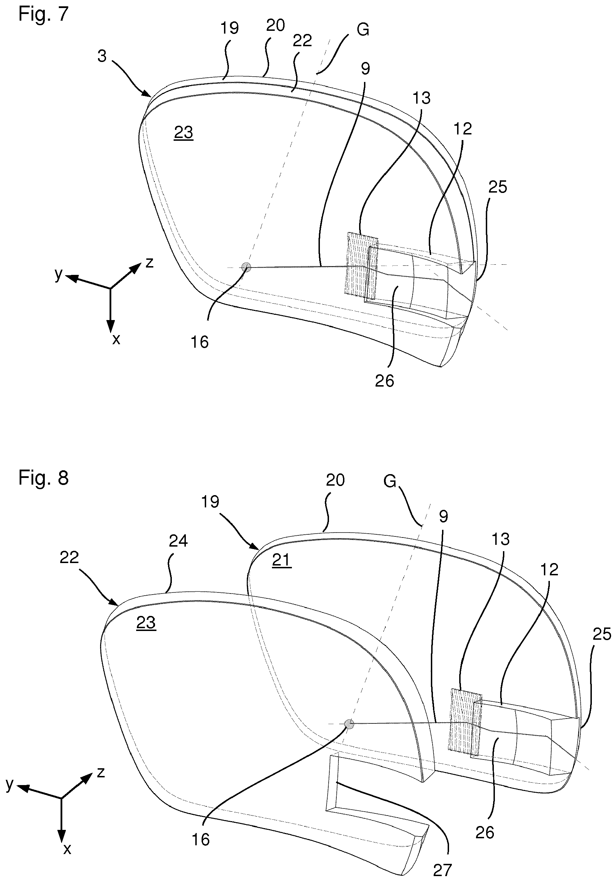

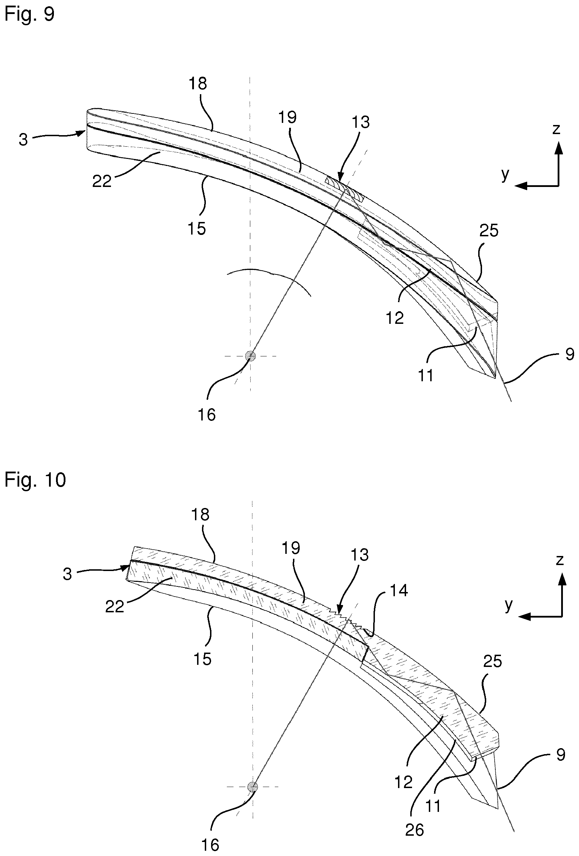

Bei einer weiteren Ausführungsform des erfindungsgemäßen Brillenglases gemäß Fig. 7 bis 10 wird eine Korrektur von - 2 Dioptrien bereitgestellt. Bei dieser Ausführungsform ist die Außenschale 19 identisch zu der Außenschale 19 der in Verbindung mit Fig. 1 bis 6 beschriebenen Ausführungsform. Lediglich die Innenschale 22 ist entsprechend angepaßt, um die gewünschte Fehlsichtigkeitskorrektur zu realisieren. Gleiche Elemente sind daher mit gleichen Bezugszeichen bezeichnet und es wird auf die Beschreibung zu Fig. 1 bis 6 verwiesen.

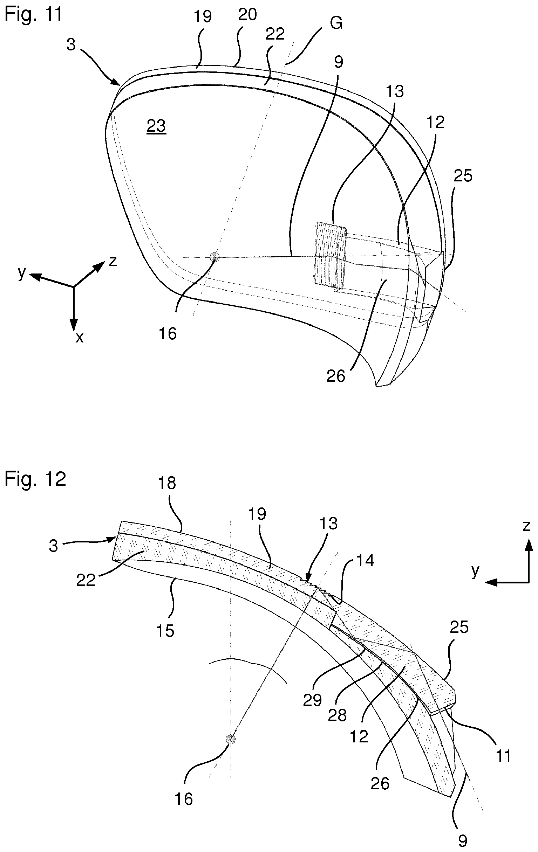

Bei den bisher beschriebenen Ausführungsformen erstreckt sich die Aussparung 27 jeweils über die gesamte Dicke der Innenschale 22. Mann kann somit auch sagen, dass der ausgesparte Abschnitt ausgestanzt ist. Es liegt somit eine seitlich offene Durchgangsöffnung vor. Es ist jedoch auch möglich, dass sich die Aussparung 27 nicht über die gesamte Dicke der Innenschale 22 erstreckt, sondern ausgehend von der zweiten Seite 24 der Innenschale 22 bis zu einer vorbestimmten Tiefe in die Innenschale 22. In diesem Fall ist bevorzugt die Tiefe der Aussparung 27, wie insbesondere in Fig. 12 angedeutet ist, so gewählt, dass im zusammengesetzten Zustand zwischen der Grenzfläche 26 des Lichtführungskanals 12 und einer Bodenfläche 28 der Aussparung 27 ein Luftspalt 29 vorhanden ist. Bei der in Fig. 11 und 12 gezeigten Ausführungsform, bei der eine solche Aussparung 27 gebildet ist, ist die Innenschale 22 so ausgelegt, dass eine Korrektur von - 4 Dioptrien bereitgestellt wird. Falls auf der Grenzfläche 26 eine reflektive Beschichtung ausgebildet ist, kann der Luftspalt 29 vorgesehen sein oder kann auf ihn verzichtet werden.

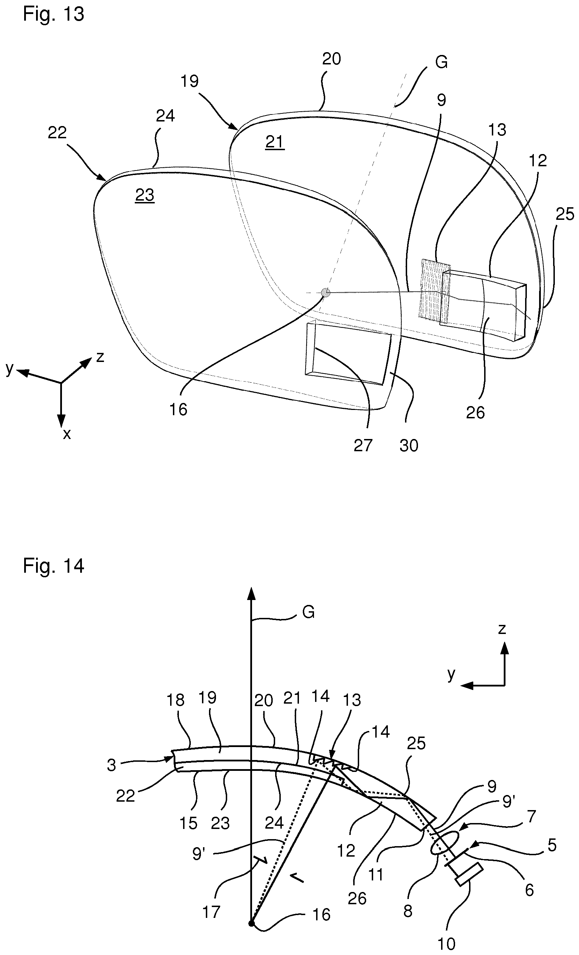

In Fig. 13 ist in einer Darstellung gemäß Fig. 4 eine Abwandlung der in Fig. 4 gezeigten Ausführungsform des erfindungsgemäßen Brillenglases 3 dargestellt.

Im Unterschied zu der in Fig. 4 gezeigten Ausführungsform ist bei dem Brillenglas gemäß Fig. 13 die Aussparung 27 als Durchgangsöffnung ausgebildet, die auch seitlich durch einen Abschnitt 30 der Innenschale 22 begrenzt ist. In diesem Fall ist der Lichtführungskanal 12 natürlich entsprechend angepaßt. Die Einkopplung erfolgt somit nicht mehr über die Stirnseite des Brillenglases 3, sondern von hinten über die Rückseite 15.

Die Aussparung 27 kann natürlich auch so ausgebildet sein, dass sie unten (in x-Richtung gesehen) oder oben offen ist. Dies hängt im wesentlichen auch davon ab, wo der Auskoppelabschnitt 13 positioniert sein soll. Natürlich ist auch eine Aussparung 27 möglich, die unten und seitlich oder oben und seitlich offen ist.

In Fig. 14 ist die vergrößerte Teilschnittansicht gemäß Fig. 2 gezeigt, wobei ein zusätzlicher Lichtstrahl 9' eingezeichnet ist, der vom Bildgeber 6 ausgeht. Wie in dieser Darstellung zu entnehmen ist, läuft der Lichtstrahl 9' im Bereich neben der Aussparung 27 durch die Innenschale 22 bevor er wiederum in die Außenschale 19 eintritt und dann auf den Auskoppelabschnitt 13 trifft. Somit kann sich der Lichtführungskanal 12 teilweise auch durch die Innenschale 22 erstrecken. Dies gilt für alle beschriebenen Ausführungsformen. Es ist jedoch auch möglich, dass der Lichtführungskanal 12 so ausgebildet ist, dass er nur in der Außenschale 19 verläuft.

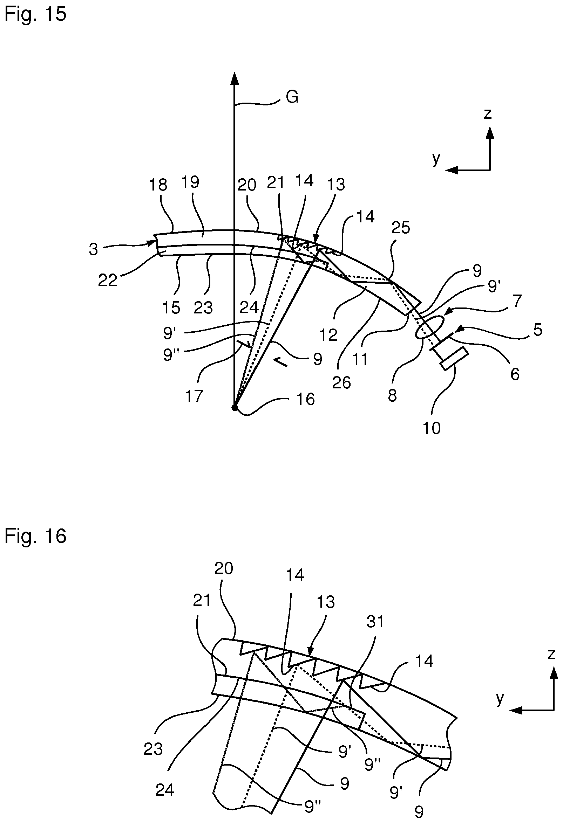

In Fig. 15 ist in gleicher Weise wie in Fig. 14 eine weitere Ausführungsform der erfindungsgemäßen Anzeigevorrichtung dargestellt. Bei dieser Ausführungsform ist die Abmessung des sich in der Innenschale 22 erstreckenden Teilbereichs des Lichtführungskanals 12 größer als bei der Ausführungsform gemäß Fig. 14. Dies wird dadurch erreicht, dass im Bereich neben der Aussparung zwischen der Außen- und Innenschale 19, 22 eine teilreflektierende Beschichtung 31 ausgebildet ist (Fig. 16), so dass ein Teil des Lichtstrahls 9' nicht in die Außenschale 19 transmittiert sondern zur zweiten Seite 23 der Innenschale 22 reflektiert wird. Dieser reflektierte Lichtstrahl 9" wird an der zweiten Seite 23 zum Auskoppelabschnitt 13 hin reflektiert (z.B. durch innere Totalreflexion oder durch eine entsprechend vorgesehene reflektive oder teilreflektive Beschichtung), so dass dann über den Auskoppelabschnitt 13 die gewünschte Auskopplung bewirkt werden kann. In dieser Art und Weise kann die laterale Ausdehnung des Auskoppelabschnitts 13 vergrößert werden. Diese Art der Vergrößerung des Auskoppelabschnitts 13 ist in der vergrößerten Detaildarstellung von Fig. 16 gut zu erkennen. In gleicher Weise ist die Aufspaltung des Lichtstrahls 9' an der teilreflektiven Beschichtung 31 klar sichtbar.

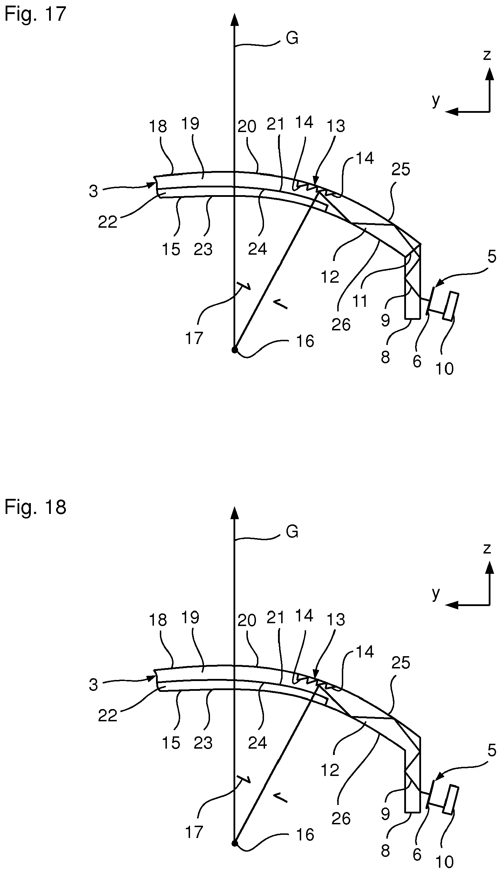

In Fig. 17 ist in gleicher Weise wie in Fig. 2 eine Weiterbildung der erfindungsgemäßen Anzeigevorrichtung dargestellt. Bei dieser Weiterbildung ist das Optikelement 8 mit der Außenschale 19 verbunden. Die Verbindung kann z.B. durch Verkitten oder Verkleben über den Einkoppelabschnitt 11 bzw. die Stirnseite 11 der Außenschale 19 erfolgen. Zur Vereinfachung der Darstellung ist das Optikelement 8 mit geraden Grenzflächen dargestellt. Die Grenzflächen können jedoch im Bereich des Durchtritts und der Reflexion der Lichtbündel 9 gekrümmt ausgebildet sein und somit eine abbildende Eigenschaft bereitstellen. Auch ist zur Vereinfachung der Darstellung das Bilderzeugungsmodul 5 seitlich neben dem Optikelement 8 eingezeichnet. Es kann jedoch auch oberhalb oder unterhalb oder in einer sonstigen Lage zum Optikelement 8 positioniert sein. Das Optikelement 8 kann auch als Tubus bezeichnet werden. Wie in der Darstellung von Fig. 17 ersichtlich ist, sind das Optikelement 8 und die Außenschale 19 so miteinander verbunden, dass sie eine L-Form bilden. Das Optikelement 8 erstreckt sich somit in Art eines Brillenbügels von der Außenschale 19 weg. Das Optikelement 8 kann Teil eines (nicht eingezeichneten) Brillenbügels oder einer sonstigen Halterung zum Tragen der Abbildungsoptik auf dem Kopf sein.

In Fig. 18 ist eine Abwandlung der Ausführungsform von Fig. 17 gezeigt. Bei dieser Abwandlung ist die Außenschale 19 einstückig mit dem Optikelement 8 ausgebildet. Dies kann beispielsweise mittels Spritzguss hergestellt werden.

Bei der erfindungsgemäßen Anzeigevorrichtung 1 erfolgt die Einspiegelung des virtuellen Bildes in das Gesichtsfeld des Benutzers über das erste Brillenglas 3. Natürlich ist auch eine Einspiegelung über das zweite Brillenglas 4 möglich. Des weiteren kann die Anzeigevorrichtung 1 so ausgebildet sein, dass Informationen bzw. virtuelle Bilder über beide Brillengläser 3, 4 eingespiegelt werden. Dabei kann die Einspiegelung so erfolgen, dass ein dreidimensionaler Bildeindruck entsteht. Dies ist jedoch nicht zwingend notwendig.

Die Brillengläser 3, 4 können eine Brechkraft von Null oder eine von Null verschiedene Brechkraft (insbesondere zur Korrektur von Fehlsichtigkeiten) aufweisen. Wie in den Figuren gezeigt ist, sind sowohl die Vorderseite 11 als auch die Rückseite 12 des Brillenglases 3 gekrümmt ausgebildet. Die Vorderseite 11 kann insbesondere sphärisch gekrümmt sein. Wenn das Brillenglas eine von Null verschiedene Brechkraft aufweist, um eine Fehlsichtigkeit zu korrigieren, ist in der Regel die Krümmung der Rückseite 15 entsprechend gewählt, um die entsprechende Korrektur zu erreichen. Die Rückseite 15 kann eine von der sphärischen Form abweichende Krümmung aufweisen.

Die Haltevorrichtung 2 muß nicht als brillenartige Haltevorrichtung ausgebildet sein. Es ist auch jede andere Art der Haltevorrichtung möglich, mit der ein Aufsetzen oder Tragen der Anzeigevorrichtung auf dem Kopf des Benutzers erfolgen kann.

## Patentansprüche

1. Brillenglas für eine auf den Kopf eines Benutzers aufsetzbare und ein Bild erzeugende Anzeigevorrichtung (1),
wobei das Brillenglas (3) eine Vorderseite (18) und eine Rückseite (15),
einen Einkoppelabschnitt (11) und einen vom Einkoppelabschnitt (11) beabstandeten Auskoppelabschnitt (13) sowie
einen Lichtführungskanal (12) aufweist, der dazu geeignet ist, Lichtbündel (9) von Pixeln des erzeugten Bildes, die über den Einkoppelabschnitt (11) des Brillenglases (3) in das Brillenglas (3) eingekoppelt sind, im Brillenglas (3) bis zum Auskoppelabschnitt (13) zu führen, von dem sie aus dem Brillenglas (3) ausgekoppelt werden,
wobei das Brillenglas (3) mehrschalig aufgebaut ist und eine Außenschale (19) und eine mit der Außenschale (19) verbundene Innenschale (22) aufweist,
**dadurch gekennzeichnet, dass**
die von der Innenschale (22) wegweisende erste Seite (20) der Außenschale (19) die Vorderseite (18) des Brillenglases (3) bildet und die von der Außenschale (19) wegweisende erste Seite (23) der Innenschale (22) die Rückseite (15) des Brillenglases (3) bildet,
wobei die Außenschale (19) den Einkoppelabschnitt (11), den Lichtführungskanal (12) und den Auskoppelabschnitt (13) aufweist,
die Innenschale (22) eine Aussparung (27) aufweist, die sich von der zur Außenschale (19) hinweisenden zweiten Seite (24) der Innenschale (22) in Richtung zur Rückseite (15) erstreckt und in der der Lichtführungskanal (12) sitzt,
wobei der Auskoppelabschnitt (13) neben der Aussparung (27) liegt, so dass die vom Auskoppelabschnitt (13) ausgekoppelten Lichtbündel (9) über die zweite Seite (24) der Innenschale (22) in die Innenschale (22) eintreten, durch die Innenschale (22) laufen und die Innenschale (22) über die Rückseite (15) verlassen.

2. Brillenglas nach Anspruch 1, **dadurch gekennzeichnet, dass** die Aussparung sich von der zweiten Seite (24) der Innenschale (22) bis zur ersten Seite (23) der Innenschale (22) erstreckt.

3. Brillenglas nach Anspruch 1 oder 2, **dadurch gekennzeichnet, dass** die Rückseite (15) eine Krümmung aufweist, die so gewählt ist, dass eine Fehlsichtigkeitskorrektur bewirkt wird.

4. Brillenglas nach einem der obigen Ansprüche, **dadurch gekennzeichnet, dass** die Innenschale (22) und die Außenschale (19) aus dem gleichen Material gebildet sind.

5. Brillenglas nach einem der obigen Ansprüche, **dadurch gekennzeichnet, dass** die Innenschale (22) mit der Außenschale (19) flächig verbunden ist.

6. Brillenglas nach einem der obigen Ansprüche, **dadurch gekennzeichnet, dass** der Auskoppelabschnitt (13) mehrere nebeneinander angeordnete reflektive Umlenkflächen (14) aufweist.

7. Brillenglas nach einem der obigen Ansprüche, **dadurch gekennzeichnet, dass** der Auskoppelabschnitt (13) in der Außenschale (19) vergraben ausgebildet ist.

8. Brillenglas nach einem der obigen Ansprüche, **dadurch gekennzeichnet, dass** der Lichtführungskanal (12) die Lichtbündel (9) durch Reflexionen an zwei gegenüberliegenden Grenzflächen (25, 26) führt.

9. Brillenglas nach Anspruch 8, **dadurch gekennzeichnet, dass** eine der Grenzflächen (25) des Lichtführungskanals (12) durch einen Abschnitt der ersten Seite (20) der Außenschale (19) gebildet ist.

10. Brillenglas nach Anspruch 8 oder 9, **dadurch gekennzeichnet, dass** die von der ersten Seite (20) der Außenschale (19) wegweisende Grenzfläche (26) des Lichtführungskanals (12) so ausgebildet ist, dass sie eine abbildende Eigenschaft aufweist.

11. Brillenglas nach einem der obigen Ansprüche, **dadurch gekennzeichnet, dass** der Lichtführungskanal (12) gegenüber einer zur Innenschale (22) hinweisenden zweiten Seite (21) der Außenschale (19) vorsteht.

12. Brillenglas nach einem der obigen Ansprüche, **dadurch gekennzeichnet, dass** die Aussparung (27) in Draufsicht gesehen U-förmig ausgebildet ist.

13. Anzeigevorrichtung mit
einer auf den Kopf eines Benutzers aufsetzbaren Haltevorrichtung (2),
einem an der Haltevorrichtung (2) befestigten Bilderzeugungsmodul (5), das ein Bild erzeugt, und
einer an der Haltevorrichtung (2) befestigten Abbildungsoptik (7), die ein Brillenglas (3) nach einem der obigen Ansprüche aufweist und die das erzeugte Bild im auf dem Kopf des Benutzers aufgesetzten Zustand der Haltevorrichtung (2) so abbildet, dass es der Benutzer als virtuelles Bild wahrnehmen kann.

14. Anzeigevorrichtung nach Anspruch 13, bei der die Abbildungsoptik (7) ein Optikelement (8) aufweist, das direkt mit der Außenschale (19) verbunden oder einstückig mit der Außenschale (19) ausgebildet ist.

15. Anzeigevorrichtung nach Anspruch 14, bei der die Außenschale (19) zusammen mit dem Optikelement (8) in einer Ansicht von oben eine L-Form bilden.

## Claims

1. Spectacle lens for a display device (1) which can be placed on the head of a user and generates an image,
wherein the spectacle lens (3) comprises a front side (18) and a rear side (15),
an input section (11) and an output section (13) separated from the input section (11) and
a light guide channel (12) which is suitable for guiding light beams (9) from pixels of the generated image, which are input into the spectacle lens (3) by way of the input section (11) of the spectacle lens (3), in the spectacle lens (3) as far as the output section (13), by which they are output from the spectacle lens (3),
wherein the spectacle lens (3) is constructed from a number of sheets and has an outer sheet (19) and an inner sheet (22) connected to the outer sheet (19),
**characterized in that**
the first side (20) of the outer sheet (19) facing away from the inner sheet (22) forms the front side (18) of the spectacle lens (3) and the first side (23) of the inner sheet (22) facing away from the outer sheet (19) forms the rear side (15) of the spectacle lens (3),
wherein the outer sheet (19) comprises the input section (11), the light guide channel (12) and the output section (13),
the inner sheet (22) has a cut-out (27), which extends from the second side (24) of the inner sheet (22) facing towards the outer sheet (19) in the direction of the rear side (15) and in which the light guide channel (12) is seated,
wherein the output section (13) is located next to the cut-out (27) such that the light beams (9) output from the output section (13) enter into the inner sheet (22) by way of the second side (24) of the inner sheet (22), pass through the inner sheet (22) and exit the inner sheet (22) by way of the rear side (15).

2. Spectacle lens according to Claim 1, **characterized in that** the cut-out extends from the second side (24) of the inner sheet (22) as far as the first side (23) of the inner sheet (22).

3. Spectacle lens according to Claim 1 or 2, **characterized in that** the rear side (15) has a curvature, which is selected in such a way that a refractive error correction is effected.

4. Spectacle lens according to any of the preceding claims, **characterized in that** the inner sheet (22) and the outer sheet (19) are made of the same material.

5. Spectacle lens according to any of the preceding claims, **characterized in that** the inner sheet (22) is areally connected to the outer sheet (19).

6. Spectacle lens according to any of the preceding claims, **characterized in that** the output section (13) has a plurality of reflective deflection surfaces (14) arranged next to one another.

7. Spectacle lens according to any of the preceding claims, **characterized in that** the output section (13) is formed in a manner buried in the outer sheet (19) .

8. Spectacle lens according to any of the preceding claims, **characterized in that** the light guide channel (12) guides the light beams (9) by way of reflections at two opposite interfaces (25, 26).

9. Spectacle lens according to Claim 8, **characterized in that** one of the interfaces (25) of the light guide channel (12) is formed by a section of the first side (20) of the outer sheet (19).

10. Spectacle lens according to Claim 8 or 9, **characterized in that** the interface (26) of the light guide channel (12) facing away from the first side (20) of the outer sheet (19) is formed in such a way that said interface has an imaging property.

11. Spectacle lens according to any of the preceding claims, **characterized in that** the light guide channel (12) protrudes in relation to a second side (21) of the outer sheet (19) facing towards the inner sheet (22).

12. Spectacle lens according to any of the preceding claims, **characterized in that** the cut-out (27) is formed in a U shape when viewed in top view.

13. Display device having
a holding device (2) which can be placed on the head of a user,
an image generation module (5), which is secured to the holding device (2) and generates an image, and an imaging optical unit (7), which is secured to the holding device (2), comprises a spectacle lens (3) according to any of the preceding claims and images the generated image in the state of the holding device (2) having been placed on the head of the user in such a way that the user can perceive it as a virtual image.

14. Display device according to Claim 13, wherein the imaging optical unit (7) has an optical element (8), which is connected directly to the outer sheet (19) or formed integrally with the outer sheet (19).

15. Display device according to Claim 14, wherein the outer sheet (19) together with the optical element (8) form an L shape when viewed from above.

## Revendications

1. Verre de lunettes, destiné à un dispositif d'affichage (1) positionnable sur la tête d'un utilisateur et générant une image,
dans lequel le verre de lunettes (3) comporte une face avant (18) et une face arrière (15), une partie d'entrée (11) et une partie de sortie (13) espacée de la partie d'entrée (11) et
un conduit guide de lumière (12) adapté pour guider des faisceaux lumineux (9) de pixels de l'image générée, qui sont injectés dans le verre de lunettes (3) par la partie d'entrée (11) du verre de lunettes (3), dans le verre de lunettes (3) jusqu'à la partie de sortie (13), d'où ils sortent du verre de lunettes (3),
dans lequel le verre de lunettes (3) possède une structure à plusieurs coques, comprenant une coque externe (19) et une coque interne (22) reliée à la coque externe (19),
**caractérisé en ce que**
la première face (20) de la coque externe (19) dirigée à l'opposé de la coque interne (22) forme la face avant (18) du verre de lunettes (3) et la première face (23) de la coque interne (22) dirigée à l'opposé de la coque externe (19) forme la face arrière (15) du verre de lunettes (3),
dans lequel la coque externe (19) comporte la partie d'entrée (11), le conduit guide de lumière (12) et la partie de sortie (13),
la coque interne (22) comporte une encoche (27) qui s'étend depuis la deuxième face (24) de la coque interne (22), qui est dirigée vers la coque externe (19), en direction de la face arrière (15) et dans laquelle se trouve le conduit guide de lumière (12),
dans lequel la partie de sortie (13) se trouve à côté de l'encoche (27), de sorte que les faisceaux lumineux (9) sortent de la partie de sortie (13), pénètrent dans la coque interne (22) par la deuxième face (24) de la coque interne (22), traversent la coque interne (22) et ressortent de la coque interne (22) par la face arrière (15) .

2. Verre de lunettes selon la revendication 1, **caractérisé en ce que** l'encoche s'étend depuis la deuxième face (24) de la coque interne (22) jusqu'à la première face (23) de la coque interne (22).

3. Verre de lunettes selon la revendication 1 ou 2, **caractérisé en ce que** la face arrière (15) présente une courbure qui est sélectionnée de manière à provoquer une correction d'un défaut de vision.

4. Verre de lunettes selon l'une des revendications précédentes, **caractérisé en ce que** la coque interne (22) et la coque externe (19) sont formées du même matériau.

5. Verre de lunettes selon l'une des revendications précédentes, **caractérisé en ce que** la coque interne (22) est reliée à la coque externe (19) de manière plane.

6. Verre de lunettes selon l'une des revendications précédentes, **caractérisé en ce que** la partie de sortie (13) présente une pluralité de surfaces déflectrices réfléchissantes (14) disposées côte à côte.

7. Verre de lunettes selon l'une des revendications précédentes, **caractérisé en ce que** la partie de sortie (13) est formée de manière encastrée dans la coque externe (19).

8. Verre de lunettes selon l'une des revendications précédentes, **caractérisé en ce que** le conduit guide de lumière (12) guide les faisceaux lumineux (9) par des réflexions sur deux surfaces limites opposées (25, 26).

9. Verre de lunettes selon la revendication 8, **caractérisé en ce que** l'une des surfaces limites (25) du conduit guide de lumière (12) est formée par une partie de la première face (20) de la coque externe (19).

10. Verre de lunettes selon la revendication 8 ou 9, **caractérisé en ce que** la surface limite (26) du conduit guide de lumière (12) dirigée à l'opposé de la première face (20) de la coque externe (19) est réalisée de manière à présenter une propriété de formation d'image.

11. Verre de lunettes selon l'une des revendications précédentes, **caractérisé en ce que** le conduit guide de lumière (12) fait saillie par rapport à une deuxième face (21) de la coque externe (19) en regard de la coque interne (22).

12. Verre de lunettes selon l'une des revendications précédentes, **caractérisé en ce que** l'encoche (27) est réalisée en forme de U en vue de dessus.

13. Dispositif d'affichage comportant
un dispositif de maintien (2) positionnable sur la tête d'un utilisateur,
un module de génération d'image (5) fixé au dispositif de maintien (2) qui génère une image, et
une optique de formation d'image (7) fixée au dispositif de maintien (2), qui comporte un verre de lunettes (3) selon l'une des revendications précédentes et qui forme l'image générée lorsque le dispositif de maintien (2) est positionné sur la tête de l'utilisateur de manière à ce que celui-ci puisse la percevoir comme une image virtuelle.

14. Dispositif d'affichage selon la revendication 13, dans lequel l'optique de formation d'image (7) comporte un élément optique (8) qui est directement relié à la coque externe (19) ou qui est réalisé d'un seul tenant avec la coque externe (19).

15. Dispositif d'affichage selon la revendication 14, dans lequel la coque externe (19) et l'élément optique (8) forment ensemble une forme de L en vue de dessus.
